# EUROPEAN PATENT SPECIFICATION

(11) **EP 3 260 425 B1**
(45) Date of publication and mention of the grant of the patent: **27.02.2019**
(21) Application number: 16708189.2
(22) Date of filing: 28.01.2016
(51) Int. Cl.: C02F 3/00, C02F 3/02, C02F 101/16

(54) **AERATION CONTROL IN WASTE WATER TREATMENT BY MONITORING NITRIFICATION BY-PRODUCTS**
BELÜFTUNGSKONTROLLE IN DER ABWASSERBEHANDLUNG DURCH ÜBERWACHUNG DER NEBENPRODUKTE DER NITRIFIKATION
CONTRÔLE DE L'AERATION DE UN TRAITEMENT DES EAUX RÉSIDUELLES EN CONTRÔLANT DES SOUS-PRODUITS DE LA NITRIFICATION

(30) Priority: 16.02.2015 ES 201530185
(43) Date of publication of application: 27.12.2017
(73) Proprietor: Acciona Agua, S.A., 28108 Alcobendas Madrid (ES)
(72) Inventor: ARNALDOS ORTS, Marina, 28108 Alcobendas (Madrid) (ES)
(74) Representative: Pons
(86) International application number: PCT/ES2016/070048
(87) International publication number: WO 2016/131998

(56) References cited:
- WO-A1-00/58227
- WO-A1-2011/146361
- FR-A1- 2 954 306
- FR-A1- 2 985 996
- JP-A- 2015 027 659

## Description

The present invention refers to a procedure for the control of aeration in the treatment of wastewater through the monitoring of nitrification by-products, specifically through the monitoring of N₂O. Therefore, the present invention can be placed in the technical field of the control of parameters in the treatment of wastewater.

### PRIOR ART

The elimination of the contaminants present in wastewater is usually undertaken through their biological oxidation by bacteria and other microorganisms. The supply of oxygen to the liquid phase for its use by these microorganisms is the most costly activity in the operation of wastewater treatment plants; it has been calculated that between 45% and 75% of the energy costs are due to the aeration system. This energy cost is especially high in the plants using nitrogen oxidation, as the nitrifying organisms are relatively intolerant to low concentrations of dissolved oxygen (DO) in comparison to the heterotrophic organisms (those that eliminate the organic material). As a consequence, DO concentrations are usually maintained between 2 ppm and 6 ppm in wastewater treatment plants that include nitrification. There is, therefore, a growing interest in the development of control systems that precisely regulate the supply of air to the biological processes that include nitrification so as to decrease operating costs as far as possible.

A number of different systems have been developed to control the air supply to the biological process. These systems differ in the type of input variable used in the control system; relative success has been achieved using variables such as the DO concentration, the oxidation-reduction potential and the concentration of the main nitrification products (ammonia, nitrite and nitrate). The main drawback with these variables is that they do not provide any information regarding the metabolic state of the organisms that have to perform the function of nitrification, that is, they provide no information on their nitrification capacity under the conditions that the process subjects them to.

In Chapter 16 of the book *Research on Nitrification and Related Processes,* entitled *Protocol for the Measurement of Nitrous Oxide Fluxes from Biological Wastewater Treatment Plants,* written by Kartik Chandran, there is a description of the measuring of N₂O for the purpose of controlling its emissions. Additionally, Mike S. M. Jetten et al. (Water Research Volume 43, 17, pages 4093 - 4103, 2009) studied how to decrease N₂O gas emissions, as it is a greenhouse gas.

The French patent FR2954306 describes a water treatment process in which N₂O concentration is measured and where airflow is increased if it is detected.

M. D. Butler et al. (Water Research, Volume 43, 5, pages 1265-1272, 2009) studied whether it is possible to use N₂O as an indicator of a failure in the nitrification process.

### DESCRIPTION OF THE INVENTION

The present invention refers to a procedure for the control of aeration in the treatment of wastewater through the monitoring of nitrification by-products, specifically through the monitoring of N₂O.

The idea of the new control system is to optimise the aeration of the biological process using the by-products of nitrification by the nitrifying bacteria as an input variable; the level of production of these by-products provides information regarding whether the nitrification carried out by these organisms is adequate or, on the other hand, whether they are being subjected to a metabolic stress that will lead to an immediate failure in nitrification.

The advantages presented by the invention's procedure are:
- greater energetic efficiency of the plant, as, although the bacteria usually function at an oxygen level of between 2 ppm and 6 ppm, it has been demonstrated that ammonia oxidising bacteria can maintain normal activity at much lower oxygen concentrations;
- the control system is more secure in relation to possible process destabilisation, as the aeration can be activated before there is a complete failure in nitrification.

Therefore, in a first aspect, the present invention refers to a wastewater treatment process characterised by the fact that in the aeration stage:
- measurements are made over time of the gradient in the concentration of NH₄⁺ and N20 over time;
- the flow rate of air into the aeration tank can be modified or maintained; where the time intervals comprise between 0.05 hours to 10 hours;
   with the condition that:
- the flow rate of air into the aeration tank is maintained if the gradient of the NH₄⁺ concentration is less than 0.5 mgN/Lh and the gradient of the N₂O concentration is equal to or greater than 0.002 mgN/Lh over the measurement period;
- the flow rate of air into the aeration tank is maintained if the gradient of the NH₄⁺ concentration is equal to or greater than 0.5 mgN/Lh and the gradient of the N₂O concentration is less than 0.002 mgN/Lh over the measurement period;
- the flow rate of air into the aeration tank is increased between 5% and 60% if the gradient of the NH₄⁺ concentration is equal to or greater than 0.5 mgN/Lh and the gradient of the N₂O concentration is equal to or greater than 0.002 mgN/Lh over the measurement period;
- the flow rate of air into the aeration tank is decreased between 5% and 60% if the gradient of the NH₄⁺ concentration is less than 0.5 mgN/Lh and the gradient of the N₂O concentration is less than 0.002 mgN/Lh over the measurement period;

The term mgN/Lh is understood to refer to mg in terms of nitrogen per litre per hour.

The term Nm³/h is understood to refer to normal cubic metre per hour.

The term wastewater treatment is understood to refer to the transformation of organic material and/or nitrogen compounds through the action of a microorganism.

The term aeration stage is understood to refer to any of the reactors in which treatment of aerobic water takes place; that is, the microorganisms oxidise the organic material and/or nitrogen compounds thanks to an external supply of oxygen and/or air.

The term aeration tank is understood to refer to a reactor in the aeration stage.

In an embodiment of the first aspect of the present invention, the time intervals comprise 0.5 hours to 5 hours, preferably between 0.75 hours and 2 hours, more preferably the time intervals are of 1 hour.

In an embodiment of the first aspect of the present invention, the gradient of the concentration of NH₄⁺ and N₂O is measured. That is, the process is a wastewater treatment process characterised in that in the aeration stage:
- measurements are made over time of the gradient in the concentration of NH₄⁺ and N₂O over time;
- the flow rate of air into the aeration tank can be modified or maintained; where the time intervals comprise between 0.05 hours to 10 hours;
   with the condition that:
- the flow rate of air into the aeration tank is maintained if the gradient of the NH₄⁺ concentration is less than 0.5 mgN/Lh and the gradient of the N₂O concentration is equal to or greater than 0.002 mgN/Lh over the measurement period;
- the flow rate of air into the aeration tank is maintained if the gradient of the NH₄⁺ concentration is equal to or greater than 0.5 mgN/Lh and the gradient of the N₂O concentration is less than 0.002 mgN/Lh over the measurement period;
- the flow rate of air into the aeration tank is increased between 5% and 60% if the gradient of the NH₄⁺ concentration is equal to or greater than 0.5 mgN/Lh and the gradient of the N₂O concentration is equal to or greater than 0.002 mgN/Lh over the measurement period;
- the flow rate of air into the aeration tank is decreased between 5% and 60% if the gradient of the NH₄⁺ concentration is less than 0.5 mgN/Lh and the gradient of the N₂O concentration is less than 0.002 mgN/Lh over the measurement period;

In another embodiment of the first aspect of the present invention, the airflow rate into the aeration tank increases between 10% and 35%. That is, in the event that the condition to increase the air flow rate is satisfied (the gradient of the NH₄⁺ concentration is equal to or greater than 0.5 mgN/Lh and the gradient of the N₂O concentration is equal to or greater than 0.002 mgN/Lh over the measurement period), this increase will be between 10% and 35% of the previous flow value.

In another embodiment of the first aspect of the present invention, the airflow rate into the aeration tank decreases between 10% and 35%. That is, in the event that the condition to decrease the air flow rate is satisfied (the gradient of the NH₄⁺ concentration is less than 0.5 mgN/Lh and the gradient of the N₂O concentration is less than 0.002 mgN/Lh over the measurement period), this decrease will be between 10% and 35% of the previous flow value.

In another embodiment of the first aspect of the present invention, the wastewater has a chemical oxygen demand between 50 mg/L and 1000 mg/l, preferably between 100 mg/L and 500 mg/L.

In another embodiment of the first aspect of the present invention, the wastewater has an ammonia concentration between 5 mgN/L and 100 mgN/l, preferably between 10 mgN/L and 50 mgN/L.

Throughout the description and the claims the word "comprises" and its variants are not intended to exclude other technical features, additives, components or steps. To those experts in the art, other objects, advantages and features of the invention will arise partly from the description and partly from the practice of the invention. The following examples are provided by way of illustration, and are not intended to be limiting of the present invention.

### EXAMPLES

The invention is illustrated below by means of tests performed by the inventors, which reveal the effectiveness of the product of the invention. **Example 1.** Aeration of wastewater following the inventions procedure

The wastewater used in this example is municipal wastewater with an average organic concentration of 200 mg/L (in terms of chemical oxygen demand) and 30 mg/L of ammonia (in terms of nitrogen). The wastewater treatment plant (WWTP) of the present example treats a water flow of 6 m³/h and has a single aerobic tank with a capacity of 20 m³. The system's solids retention time is approximately 6 days. The initial airflow is 20 Nm³/h.

In the example described, there is an ammonia sensor installed in the wastewater treatment plant (WWTP); this is located in the header of the plant measuring the ammonia that enters with the influent. Additionally, N₂O is measured in the liquid phase in the aerobic tank (in the present example, the aeration stage contains a single aerobic tank), where the concentration of this parameter is measured in the liquid phase. The concentrations are measured continuously; the values measured are registered in a supervisory control and data acquisition system (SCADA) within the WWTP. In this situation, the concentrations registered by the sensors are used by the control system installed in the SCADA to calculate the variation in the gradient of each of the parameters over intervals of 1 hour. An increase in the ammonia concentration is considered significant when the registered gradient is greater than 0.5 mg/(L h) in terms of nitrogen. An increase in the N₂O concentration is considered significant when the registered gradient is greater than 0.002 mg/(L h) in terms of nitrogen.

The calculations of gradients are carried out every hour for each parameter and then the control uses this information to take decisions regarding the required flow of the blower. The possible decisions of the control system are described below:
- If the ammonia undergoes a significant increase and the N₂O undergoes a significant increase, then the flow of the blower increases by 5 Nm³/h
- If the ammonia undergoes a significant increase and the N₂O does not undergo a significant increase, then the flow of the blower is maintained at the previous value
- If the N₂O undergoes a significant increase and the NH₄⁺ does not undergo a significant increase, then the flow of the blower is maintained at the previous value
- If the N₂O does not undergo a significant increase and the NH₄⁺ undergoes a significant increase, then the flow of the blower decreases by 5 Nm³/h.

In the situation described a saving is made in the flow of the blower, and therefore, in the electrical energy consumed, in comparison with the conventional aeration control systems with in line measurement of oxygen. This is because the blower is only activated in situations in which there is an increase in the loading of the biological process (that is, a significant increase in ammonia concentrations) and simultaneously, the nitrifying microorganisms find it difficult to process this increased loading (there is a significant increase in N₂O concentrations). In the conventional processes, a *setpoint* is established for oxygen and the blower works to maintain this *setpoint,* independently of the process loading and above all, of the nitrifying microorganism's capacity to process this loading. In the example described, the implementation of the control based on the by-products of nitrification produces a saving of at least 20% in energy consumption compared to the conventional process.

There are other aeration control systems in addition to the conventional one. One of the most effective is that of control based on the ammonia in the plant header; under this form of control the air is supplied to the biological tank as a function of the loading that enters the plant. However, this control does not use information regarding the microorganism's capacity to process the loading introduced to the biological tank. This results in situations in which energy is used unnecessarily as, although the loading increases, the nitrifying microorganisms are capable of processing it without risking the process. In addition, the control of ammonia ignores the situation where, although the loading does not increase, the microorganisms are inhibited by some environmental situation (toxic spill, decrease in temperature, etc.) and the continuity of the process is put in danger. The example described results in an energy saving of at least 10% compared to the monitoring of ammonia in the header.

## Claims

1. Biological nitrification wastewater treatment procedure in a wastewater treatment plant wherein in the aeration stage:
- measurements are made over time of the gradient in the concentration of NH₄⁺ and N₂O over time;
- the flow rate of air into the aeration tank can be modified or maintained; where the time intervals comprise between 0.05 hours to 10 hours; **characterised in that**:
- the flow rate of air into the aeration tank is maintained if the gradient of the NH₄⁺ concentration is less than 0.5 mgN/Lh and the gradient of the N₂O concentration is equal to or greater than 0.002 mgN/Lh over the measurement period;
- the flow rate of air into the aeration tank is maintained if the gradient of the NH₄⁺ concentration is equal to or greater than 0.5 mgN/Lh and the gradient of the N₂O concentration is less than 0.002 mgN/Lh over the measurement period;
- the flow rate of air into the aeration tank is increased between 5% and 60% if the gradient of the NH₄⁺ concentration is equal to or greater than 0.5 mgN/Lh and the gradient of the N₂O concentration is equal to or greater than 0.002 mgN/Lh over the measurement period; or
- the flow rate of air into the aeration tank is decreased between 5% and 60% if the gradient of the NH₄⁺ concentration is less than 0.5 mgN/Lh and the gradient of the N₂O concentration is less than 0.002 mgN/Lh over the measurement period,
- the N₂O concentration is measured in the liquid phase in the aerobic tank and that NH₄⁺ concentration that enters with the influent is measured in the header of the plant.

2. Procedure according to claim 1 where the time intervals comprise between 0.5 hours and 5 hours.

3. Procedure according to any of the previous claims where the time intervals comprise between 0.75 hours and 2 hours.

4. Procedure according to any of the previous claims where the flow rate of air into the aeration tank increases by between 10% and 35%.

5. Procedure according to any of the previous claims where the flow rate of air into the aeration tank decreases by between 10% and 35%.

6. Procedure according to any of the previous claims where the wastewater has a chemical oxygen demand of between 50 mg/L and 1000 mg/L.

7. Procedure according to the previous claim, where the wastewater has a chemical oxygen demand of between 100 mg/L and 500 mg/L.

8. Procedure according to any of the previous claims, where the wastewater has an ammonia concentration of between 5 mgN/L and 100 mgN/L.

9. Procedure according to the previous claim, where the wastewater has an ammonia concentration of between 10 mgN/L and 50 mgN/L.

## Patentansprüche

1. Biologisches Nitrifikations-Behandlungsverfahren von Abwasser in einer Abwasserbehandlungsanlage, wobei in der Belüftungsstufe:
- Messungen im Zeitintervall des Konzentrationsgradienten von NH₄⁺ und N₂O in Bezug auf die Zeit durchgeführt werden;
- die Luftströmungsgeschwindigkeit in das Belüftungsbecken verändert oder beibehalten werden kann; wobei die Zeitintervalle zwischen 0,05 Stunden und 10 Stunden umfassen;
**dadurch gekennzeichnet, dass**:
- die Luftströmungsgeschwindigkeit in das Belüftungsbecken beibehalten wird, wenn der Gradient der NH₄⁺-Konzentration kleiner als 0,5 mgN/lh ist und der Gradient der N₂O-Konzentration gleich oder größer als 0,002 mgN/Ih ist;
- die Luftströmungsgeschwindigkeit in das Belüftungsbecken beibehalten wird, wenn der Gradient der NH₄⁺-Konzentration gleich oder größer als 0,5 mgN/Ih ist und der Gradient der N₂O-Konzentration über den Messzeitraum kleiner als 0,002 mgN/Ih ist;
- die Luftströmungsgeschwindigkeit in das Belüftungsbecken zwischen 5 % und 60 % erhöht wird, wenn der Gradient der NH₄⁺-Konzentration gleich oder größer als 0,5 mgN/lh ist und der Gradient der N₂O-Konzentration über den Messzeitraum gleich oder größer als 0,002 mgN/Ih ist; oder
- die Luftströmungsgeschwindigkeit in das Belüftungsbecken zwischen 5 % und 60 % verringert wird, wenn der Gradient der NH₄⁺-Konzentration kleiner als 0,5 mgN/Ih ist und der Gradient der N₂O-Konzentration über den Messzeitraum kleiner als 0,002 mgN/Ih ist,
- die N₂O-Konzentration in der flüssigen Phase in dem aeroben Becken gemessen wird und dass die NH4⁺-Konzentration, die mit dem Beschickungsmaterial eintritt, im Kopf der Anlage gemessen wird.

2. Verfahren nach Anspruch 1, wobei die Zeitintervalle zwischen 0,5 Stunden und 5 Stunden umfassen.

3. Verfahren nach einem der vorhergehenden Ansprüche, wobei die Zeitintervalle zwischen 0,75 Stunden und 2 Stunden umfassen.

4. Verfahren nach einem der vorhergehenden Ansprüche, wobei die Luftströmungsgeschwindigkeit in das Belüftungsbecken zwischen 10% und 35 % zunimmt.

5. Verfahren nach einem der vorhergehenden Ansprüche, wobei die Luftströmungsgeschwindigkeit in das Belüftungsbecken zwischen 10 % und 35 % abnimmt.

6. Verfahren nach einem der vorhergehenden Ansprüche, wobei das Abwasser einen chemischen Sauerstoffbedarf zwischen 50 mg/l und 1000 mg/l aufweist.

7. Verfahren nach dem vorhergehenden Anspruch, wobei das Abwasser einen chemischen Sauerstoffbedarf zwischen 100 mg/l und 500 mg/l aufweist.

8. Verfahren nach einem der vorhergehenden Ansprüche, wobei das Abwasser eine Ammoniakkonzentration zwischen 5 mgN/l und 100 mgN/l aufweist.

9. Verfahren nach dem vorhergehenden Anspruch, wobei das Abwasser eine Ammoniakkonzentration zwischen 10 mgN/l und 50 mgN/l aufweist.

## Revendications

1. Procédure de traitement d'eaux résiduelles en nitrification biologique dans une centrale de traitement d'eaux résiduelles dans laquelle dans l'étape d'aération :
- des mesures sont réalisées périodiquement du gradient dans la concentration de NH₄⁺ et de N₂O périodiquement ;
- le débit d'air dans le bassin d'aération peut être modifié ou maintenu ;
où les intervalles de temps sont compris entre 0,05 heures et 10 heures ; **caractérisée en ce que** :
- le débit d'air dans le bassin d'aération est maintenu si le gradient de la concentration de NH₄⁺ est inférieur à 0,5 mgN/Lh et si le gradient de la concentration de N₂O est égal ou supérieur à 0,002 mgN/Lh sur la période de mesure ;
- le débit d'air dans le bassin d'aération est maintenu si le gradient de la concentration de NH₄⁺ est égal ou supérieur à 0,5 mgN/Lh et si le gradient de la concentration de N₂O est inférieur à 0,002 mgN/Lh sur la période de mesure ;
- le débit d'air dans le bassin d'aération augmente de 5 % à 60 % si le gradient de la concentration de NH₄⁺ est égal ou supérieur à 0,5 mgN/Lh et si le gradient de la concentration de N₂O est égal ou supérieur à 0,002 mgN/Lh sur la période de mesure ; ou
- le débit d'air dans le bassin d'aération diminue de 5 % à 60 % si le gradient de la concentration de NH₄⁺ est inférieur à 0,5 mgN/Lh et si le gradient de la concentration de N₂O est inférieur à 0,002 mgN/Lh sur la période de mesure,
- la concentration de N₂O est mesurée dans la phase liquide dans le bassin aérobie et la concentration de NH₄⁺ qui entre avec l'affluent est mesurée à la tête de la centrale.

2. Procédure selon la revendication 1 où les intervalles de temps sont compris entre 0,5 heures et 5 heures.

3. Procédure selon l'une quelconque des revendications précédentes où les intervalles de temps sont compris entre 0,75 heures et 2 heures.

4. Procédure selon l'une quelconque des revendications précédentes où le débit d'air dans le bassin d'aération augmente de 10 % à 35 %.

5. Procédure selon l'une quelconque des revendications précédentes où le débit d'air dans le bassin d'aération diminue de 10 % à 35 %.

6. Procédure selon l'une quelconque des revendications précédentes où les eaux résiduelles ont une demande d'oxygène chimique entre 50 mg/L et 1000 mg/L.

7. Procédure selon la revendication précédente, où les eaux résiduelles ont une demande d'oxygène chimique entre 100 mg/L et 500 mg/L.

8. Procédure selon l'une quelconque des revendications précédentes, où les eaux résiduelles ont une concentration d'ammoniaque entre 5 mgN/L et 100 mgN/L.

9. Procédure selon la revendication précédente, où les eaux résiduelles ont une concentration d'ammoniaque entre 10 mgN/L et 50 mgN/L.
